(19) Europäisches Patentamt
European Patent Office
Office européen des brevets

(11) **EP 2 010 382 B1**

(12) **FASCICULE DE BREVET EUROPEEN**

(45) Date de publication et mention de la délivrance du brevet:
**12.04.2017 Bulletin 2017/15**

(21) Numéro de dépôt: **07728232.5**

(22) Date de dépôt: **18.04.2007**

(51) Int Cl.:
*B32B 17/06* (2006.01)    *C03C 27/12* (2006.01)
*C09K 21/02* (2006.01)    *E06B 5/16* (2006.01)
*C09D 1/04* (2006.01)    *C04B 28/26* (2006.01)
*C01B 33/32* (2006.01)    *C09D 5/18* (2006.01)

(86) Numéro de dépôt international:
**PCT/EP2007/053770**

(87) Numéro de publication internationale:
**WO 2007/118885 (25.10.2007 Gazette 2007/43)**

(54) **VITRAGE ANTI-FEU**

BRANDSCHUTZVERGLASUNG

FIRE-RESISTANT GLAZING

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **19.04.2006 EP 06112746**

(43) Date de publication de la demande:
**07.01.2009 Bulletin 2009/02**

(73) Titulaire: **AGC Glass Europe**
**1348 Louvain-la-Neuve (BE)**

(72) Inventeurs:
• **ALDENHOFF, Olivier**
**6040 Jumet (BE)**

• **DURY, Bertrand**
**6040 Jumet (BE)**

(74) Mandataire: **Le Vaguerèse, Sylvain Jacques et al**
**AGC Glass Europe**
**Technovation Centre**
**IP Department**
**Rue Louis Blériot, 12**
**6041 Gosselies (BE)**

(56) Documents cités:
**EP-A- 1 431 027        WO-A-02/100636**
**WO-A-03/064801        DE-A1- 10 337 577**
**FR-A- 2 607 491        FR-A- 2 679 549**
**US-A1- 2003 180 543**

## Description

La présente invention concerne les vitrages anti-feu comprenant au moins une couche d'un silicate alcalin hydraté dont l'exposition au feu engendre la formation d'une mousse opaque qui s'oppose à la transmission des radiations et maintient les feuilles de verre auxquelles la ou les couches de silicate alcalin sont associées. L'invention concerne plus particulièrement les vitrages en question dont la couche intumescente est préparée par séchage d'une solution de silicates alcalins.

L'invention vise encore plus particulièrement les vitrages dont la couche intumescente est constituée de silicates principalement de sodium.

Les produits dans lesquels la ou les couches de silicates sont formées par séchage, sont obtenus traditionnellement à partir de solutions commerciales de silicates, solutions auxquelles sont ajoutés des additifs divers qui en améliorent les propriétés et/ou les conditions de mise en oeuvre. Les couches sont produites en répandant la solution sur un support et en procédant à un séchage plus ou moins prolongé. Au cours du séchage la couche se solidifie.

La couche de silicate ainsi formée, éventuellement directement sur une feuille de verre, est ensuite incluse dans un ensemble feuilleté au cours d'une ou plusieurs opérations de calandrage et d'étuvage.

Pour ces produits les conditions de préparation, et particulièrement celles de séchage sont relativement contraignantes.

Le séchage traditionnellement se fait dans des enceintes dans lesquelles température, humidité relative et ventilation doivent être précisément contrôlées en suivant des cycles dont la durée, d'autant plus longue que la teneur initiale en eau est plus importante, se compte en dizaines d'heures. Typiquement pour des couches de rapport molaire $SiO_2/Na_2O$ de 3,4, des teneurs en eau de l'ordre de 25% et une épaisseur de 1,5mm, le cycle de séchage n'est pas inférieur à 24h et peut atteindre 48h selon les conditions de mise en oeuvre.

La durée de séchage n'est pas seulement coûteuse elle influe aussi le cas échéant sur la qualité des produits obtenus. A des températures de l'ordre d'une centaine de °C le contact prolongé des feuilles de verre et de compositions intumescentes fortement alcalines peut conduire une attaque superficielle du verre.

Les solutions industrielles de silicates alcalins sont choisies comme matière première de base traditionnelle de ces couches intumescentes en raison de leur faible coût. En contrepartie ces solutions dont la composition est réglée de telle sorte qu'elles restent fluides (elles présentent une viscosité de l'ordre de 100mPaxs) présentent une teneur en eau relativement élevée. La teneur en eau des solutions commerciales de silicates de sodium est fonction du rapport molaire $SiO_2/Na_2O$. Elle est de l'ordre de 65% en poids pour un rapport molaire de 3,4. Une quantité significative de l'eau initialement présente doit être éliminée au cours du séchage conduisant aux couches intumescentes dont la teneur en eau résiduelle est environ deux fois moindre.

Le choix des teneurs en eau dans la couche intumescente est fonction, non seulement des propriétés anti-feu, mais aussi de la qualité optique des vitrages obtenus. Pour des teneurs en eau élevées les couches intumescentes ont tendance à être moins stables au vieillissement. Il est difficile de garantir que ces produits restent parfaitement transparents. Il se forme souvent un voile qui va en s'accentuant au fil du temps. Pour cette raison, le séchage ne peut pas être limité sans prendre le risque de dégrader les qualités de résistance au vieillissement.

Les nombreuses propositions antérieures d'amélioration des produits à base de silicates alcalins hydratés, aménagent de façon plus ou moins significative les compromis entre la commodité et la rapidité de fabrication d'une part, et les propriétés des produits résultants d'autre part. Ces améliorations portent aussi bien sur les techniques de fabrication que sur les compositions mises en oeuvre.

Au chapitre des techniques, on peut citer l'utilisation d'atmosphère contrôlée au cours du séchage pour éviter notamment la formation de bulles dans le produit au cours de son vieillissement. Dans ce sens l'utilisation d'oxygène à la place de l'air dans les enceintes de séchage est avantageuse. Toujours à propos des techniques, il a été proposé de remplacer le séchage « statique » effectué dans des enceintes dans lesquelles sont entreposées des feuilles de verre revêtues d'une couche de composition de silicate à sécher, par un système « dynamique » dans lequel la composition à sécher est déposée sous forme d'un film sur un convoyeur support, lequel progresse de façon continue dans un four de séchage de type tunnel. Le temps alloué au séchage dans ces conditions est nécessairement plus court que celui du séchage dans des enceintes, et, compte tenu de ce que le temps de séchage croît plus vite que l'épaisseur de la couche, pour une teneur en eau finale déterminée, les couches obtenues dans ces conditions ne peuvent avoir qu'une épaisseur limitée par rapport à celles obtenues en séchage statique.

Traditionnellement, l'adjonction de glycérine ou d'un polyol dans la composition est utilisée pour améliorer les caractéristiques mécaniques des couches intumescentes. En contrepartie, la présence de glycérine ou de manière générale de composés organiques doit être précisément ajustée pour ne pas altérer le comportement au feu.

D'autres types d'additifs ont encore été proposés, et parmi ceux-ci divers agents tensioactifs qui favorisent le mouillage des substrats avec lesquels la solution de silicate alcalin est en contact.

Les propositions antérieures résultent de compromis variés entre les exigences de toutes sortes qui s'appliquent à ce type de produits. Des solutions alternatives sont cependant nécessaires pour améliorer les conditions de production et/ou les caractéristiques des produits notamment des produits répondant à des conditions d'utilisation bien spécifiques.

Une demande constante est de disposer de produits préparés avec les matières premières les plus banales et par suite les moins coûteuses, tout en mettant en oeuvre des procédés aussi commodes et rapides d'exécution que possible, le tout sans perdre le bénéfice de bonnes propriétés tant sur le plan anti-feu que sur celui des caractéristiques optiques.

Les inventeurs ont choisi de produire les vitrages anti-feu à partir des compositions de silicates alcalins disponibles dans des qualités industrielles, et plus précisément à partir de silicates de sodium, et de proposer de nouveaux moyens permettant de réduire sensiblement les opérations de séchage.

Les inventeurs ont montré que ces objectifs pouvaient être atteints en partant de solutions de silicates de sodium produites industriellement, en incorporant à ces solutions une quantité adéquate de suspension aqueuse de silice colloïdale concentrée permettant d'effectuer le séchage sur des solutions dont la teneur en eau pour un même rapport $SiO_2/Na_2O$ peut être moindre.

Dans la préparation des compositions soumises au séchage, l'introduction de silice pulvérulente qui aurait pour avantage de ne pas ajouter d'eau, à l'expérience n'apparaît pas réalisable de façon pratique. La dispersion homogène de la silice dans ces solutions de silicates est extrêmement difficile, même sous une agitation intense prolongée. Pour cette raison les inventeurs choisissent d'utiliser de préférence les suspensions aqueuses de silice colloïdale les plus concentrées disponibles dans le commerce. Les teneurs les plus importantes sont de l'ordre de 50% en poids de silice dans ces suspensions. Il est néanmoins possible d'utiliser des suspensions moins riches en silice.

A titre indicatif les solutions disponibles dans le commerce de silicates de sodium en fonction de leur rapport molaire $SiO_2/Na_2O$ présentent les teneurs en eau pondérales suivantes :

| $SiO_2/Na_2O$ | 2,1 | 2,8 | 3,0 | 3,4 | 3,9 |
|---|---|---|---|---|---|
| $H_2O$% | 40 | 55 | 60 | 65 | 71 |

On note qu'en pratique, les solutions de silicates industrielles ne sont pas disponibles à des rapports molaires supérieurs à environ 4.

L'addition de suspensions concentrées de silice colloïdale à des solutions de silicate industrielles, permet de préparer des solutions stables à même rapport molaire comportant une teneur en eau sensiblement moindre, et par suite conduisant à un temps de séchage réduit.

Les compositions suivantes préparées en ajoutant une suspension concentrée de silice colloïdale à de l'hydroxyde de sodium sont les limites de ce qui peut être préparé selon l'invention.

| $SiO_2/Na_2O$ | 3,0 | 4,0 |
|---|---|---|
| $H_2O$ % | 43 | 45 |

Pour un même rapport molaire $SiO_2/Na_2O$ on voit sur ces exemples que la teneur en eau initiale est réduite d'environ 20% en poids. Par rapport à la quantité d'eau à éliminer, cette réduction selon l'invention n'est pas inférieure à 10% et peut s'élever à 50% de la masse éliminée lors du séchage. Cette réduction est le plus usuellement de 15 à 40% de la masse d'eau à évaporer lors du séchage.

Les inventeurs ont établi une relation empirique entre le rapport molaire (Rm= $SiO_2/Na_2O$) d'une part et la teneur en eau en poids ($H_2O$%) que présentent les compositions soumises au séchage de l'invention d'autre part. Cette relation pour des compositions (hors additifs) constituées des silicates alcalins additionnés de la silice colloïdale et le cas échéant de l'hydroxyde de sodium, et dont le rapport molaire se situe dans le domaine indiqué plus loin à savoir 2,7 à 4,1 est:

$$H_2O\% < 13Rm + 17$$

La teneur en eau des compositions selon l'invention répond à la relation:

$$H_2O\% < 13Rm + 14$$

Les compositions utilisées pour constituer les couches intumescentes des vitrages selon l'invention présentent un rapport $SiO_2/Na_2O$ de 3,2 à 3,8. Ce rapport est choisi de manière à remplir deux conditions. Il est suffisamment élevé pour que les produits présentent un caractère "réfractaire". Ce qualificatif désigne la propriété pour le matériau intumescent, dans les épreuves au feu, et après la formation de la mousse, de ne se ramollir qu'aux températures les plus élevées possibles. Inversement l'accroissement de ce rapport à pour conséquence une diminution de la plasticité du matériau. Une certaine plasticité paraît en effet utile pour conférer au vitrage une bonne résistance à ce qui est désigné sous le nom de "choc mou". Cette propriété est garante de la sécurité des personnes en cas de heurt des vitrages, en dehors des conditions d'exposition au feu.

La présence d'additifs comme la glycérine améliore d'une certaine façon la plasticité. Mais, même en présence de glycérine le rapport molaire est de préférence limité, d'autant que la présence trop abondante de glycérine peut nuire aux propriété anti-feu.

La teneur en eau de la couche intumescente produite est directement dépendante de la composition initiale et de l'étendue de l'opération de séchage effectuée sur cette composition. Pour réduire le séchage et le coût de celui-ci, il n'est pas possible d'augmenter la teneur en eau des couches intumescentes sans risquer de compromettre la stabilité au vieillissement du produit final. Le choix de la teneur en eau et donc de l'importance du séchage, résulte nécessairement du compromis entre la stabilité au vieillissement d'une part et de la durée de l'opération de séchage d'autre part.

Les teneurs en eau des couches intumescentes selon l'invention sont de 20 à 35% et de préférence de 22 à 30% en poids. Ces teneurs en eau dépendent aussi du choix du rapport molaire $SiO_2/Na_2O$. De manière générale, ces deux valeurs évoluent dans le même sens, autrement dit les rapports élevés suivent aussi les teneurs en eau élevées. Les combinaisons appropriées connues des produits antérieurs, selon l'invention sont réunies pour des produits obtenus dans des conditions de séchage inconnues précédemment.

On sait, comme rappelé ci-dessus, que les produits actuellement sur le marché, en plus des silicates renferment fréquemment des additifs, et en particulier un ou plusieurs polyols, notamment la glycérine. Ces polyols peuvent se substituer en partie à l'eau dans les compositions de silicate tout en améliorant les qualités "plastiques" des couches séchées. Lorsque des produits de cette nature sont présents dans la composition utilisée selon l'invention leur teneur dans la couche après séchage n'excède pas 25% en poids, et de préférence 20% en poids. Cette teneur est avantageusement supérieure ou égale à 5% en poids et de préférence supérieure à 6%.

Les teneurs combinées eau et polyols de préférence ne dépassent pas 50% en poids de la couche intumescente, et de manière particulièrement préférée ne dépassent pas 45% en poids.

Les suspensions aqueuses de silice disponibles dans le commerce, contiennent pour certaines des polyols, introduits pour faciliter la dispersion et améliorer la stabilité de ces dispersions. L'utilisation de ces suspensions est une manière d'introduction de ces polyols dans les compositions des couches intumescentes.

Compte tenu des teneurs en eau des solutions de silicates industrielles, et en particulier de celles présentant les rapports $SiO_2/Na_2O$ les plus élevés, l'adjonction de silice sous forme des suspensions les plus riches permet de réduire la teneur en eau globale. Cette réduction n'est pas toujours suffisante. Une manière de réduire encore cette teneur en eau consiste à partir de solutions de silicates à faible teneur en eau, par exemple à 40%, mais ces solutions étant à faible rapport $SiO_2/Na_2O$, imposent en contrepartie une addition plus importante de silice colloïdale.

Toujours pour constituer des compositions à faible teneur en eau, une partie du sodium présent dans la composition peut provenir de l'addition de solutions concentrées de soude ou même de pastilles de soude, qui combinées à la silice colloïdale se substituent à une partie au moins des silicates industriels. Si tout le sodium peut être introduit par ce biais, avantageusement cette part ne représente avantageusement pas plus de 60% du sodium présent dans la couche et de préférence pas plus de 40%.

Compte tenu du coût relativement important de la silice colloïdale par rapport aux solutions industrielle de silicates, il est souhaitable dans toute la mesure du possible de rechercher les meilleurs compromis, dans la combinaison des sources de silice.

De même en raison de l'incidence sur le coût des produits préparés, partant d'une solution de silicate de sodium industrielle, la quantité de silice ajoutée est de préférence limitée à ce qui est nécessaire pour parvenir à la composition correspondant au rapport $SiO_2/Na_2O$ recherché. Dans le matériau constituant la couche intumescente, la part de silice provenant de la silice colloïdale peut être supérieure à 60%, mais de préférence n'est pas supérieure à 40%. Elle est d'au moins 5% et avantageusement d'au moins 15%.

La durée du séchage croissant comme le carré de la teneur en eau, la durée de séchage peut être réduite dans des proportions importantes allant jusqu'au tiers ou même davantage de cette durée par rapport à ce que serait l'opération en partant des seuls silicates commerciaux seuls. Inversement, le fait de pouvoir conduire le séchage sur une composition moins riche en eau permet le cas échéant de produire des couches plus épaisses sans que le temps nécessaire pour le séchage devienne prohibitif.

Les compositions initiales destinées à la formation des couches intumescentes selon l'invention peuvent encore contenir divers adjuvants traditionnellement utilisés dans ce type de couches.

Il est traditionnel d'introduire des produits de type polyols, notamment de la glycérine dans les couches de silicates de sodium afin d'améliorer leur plasticité, plasticité qui commande notamment leurs qualités mécaniques. Cette présence s'avère d'autant plus nécessaire que la teneur en eau de ces produits est moins importante. A l'inverse pour les produits obtenus selon l'invention, qui présentent avantageusement des teneurs en eau sensiblement plus importantes, la teneur en ces additifs, lorsque ceux-ci sont présents, peut être nettement moindre. De cette façon on minimise aussi les inconvénients attachés à la présence de ces additifs. En particulier la faible teneur en composés polyols permet encore de faciliter le séchage des couches.

D'autres additifs traditionnels sont constitués par les composés de type TEOS (tétraéthyl-orthosilicate) ou MTEOS (trimethoxy-méthyl-silane). Ces composés sont introduits dans les couches notamment pour en améliorer les propriétés mécaniques. Leur introduction conduit à des teneurs qui ne dépassent pas 3% en poids de la couche.

Il est encore connu d'introduire des composés aminés, et notamment l'urée, qui améliorent la formation de mousses homogènes lors de l'expansion sous l'effet de la chaleur. Selon l'invention les composés aminés de préférence n'excèdent pas 2% en poids de la couche. D'autres composés aminés tels que le TMAH (tétraméthyl amine hydroxyde) ou un sel de celui-ci peuvent améliorer le comportement au vieillissement (haze).

Par ailleurs pour faciliter le contact de la couche intumescente avec le substrat sur lequel elle est déposée pour effectuer le séchage, des agents tensioactifs sont fréquemment introduits dans les compositions initiales.

L'opération de séchage, nécessaire selon l'invention, s'effectue sur une composition dont la teneur en eau est comprise entre 40 et 65% en poids. Cette composition liquide est coulée sous forme d'un film d'épaisseur uniforme sur un support qui peut être constitué de façon traditionnelle par une feuille de verre destinée à faire partie du vitrage final. La feuille recouverte par la solution est comme dans les techniques antérieures introduite dans une enceinte régulée en température et humidité. L'air chauffé circulant dans l'enceinte entraîne progressivement une partie de l'eau de la solution. Le séchage peut aussi être réalisé de façon connue la composition étant déposée en couche mince sur un support flexible constituant un support temporaire dont la couche est séparée après séchage. En variante le support flexible peut être incorporé au vitrage final avec la couche intumescente qu'il supporte pendant l'opération de séchage.

Le séchage de la solution est effectué jusqu'à ramener la teneur en eau aux valeurs indiquées ci-dessus. Il se poursuit normalement même après que la solution soit passée sous forme d'un gel.

Selon l'invention, comme indiqué précédemment, pour que le séchage soit aussi rapide que possible il est préférable de minimiser l'épaisseur des couches au moment du séchage. Compte tenu du raccourcissement de ce séchage, il est possible de majorer un peu les épaisseurs produites par rapport à celles des produits antérieurs sans atteindre à des durées de séchage excessives.

En pratique, pour ne pas prolonger le temps de séchage de façon excessive, l'épaisseur des couches ne dépasse pas normalement 3mm. Pour constituer des épaisseurs plus importantes il est préférable comme décrit antérieurement d'accoler deux couches séchées séparément. Les couches intumescentes les plus usuelles ont une épaisseur d'au moins 1mm, et avantageusement d'au moins 1,5mm.

Les inventeurs ont encore constaté que l'ajout de silice colloïdale, en dehors des avantages énoncés ci-dessus, à composition analogue par ailleurs, semble réduire la tendance au vieillissement. Cet effet sur les propriétés de transparence des produits selon l'invention intervient suivant un mécanisme qui n'est pas élucidé, et ceci même pour des teneurs faibles de silice introduite sous forme de silice colloïdale.

Sans que l'analyse structurelle des produits ait été entreprise de manière systématique, les différences de propriétés semblent traduire des différences sensibles entre les couches formées de façon traditionnelle et celles de l'invention. Ces différences sont probablement dans la nature chimique des constituants en présence, et dans leur mode de réaction et de croissance.

Il apparaît également que la constitution des chaînes silicatées est sensible à la façon dont la composition de départ est préparée. Il n'est pas indifférent de procéder en ajoutant progressivement la silice. Les réactions, et leur développement sont commandés différemment selon les proportions respectives des réactifs en présence. De la même manière la nature des couches préparées peut être influencée par les caractéristiques des silices colloïdales ajoutées. Leur réactivité semble effectivement dépendante des dimensions des particules. Des essais effectués avec des suspensions de silice dont les dimensions moyennes sont respectivement de l'ordre de 7 et 30 nanomètres ne conduisent pas à des résultats identiques. Les particules les plus petites étant plus nombreuses à masse égale leur réactivité est plus grande et en conséquence il est vraisemblable que les silicates présentent des chaînes plus courtes. Pour la réalisation de l'invention il semble préférable que la "réaction" ne soit pas trop rapide. En conséquence des particules trop petites ne sont pas avantageuses.

Les considérations précédentes ne lient pas les inventeurs. Elles sont pour beaucoup encore en cours de vérification. L'important est de constater l'incidence des mesures prises selon l'invention sur les propriétés des produits obtenus.

Les exemples suivants illustrent l'invention de façon détaillée.

Exemple comparatif 1.

Une solution de silicate de sodium industrielle de rapport molaire apparent $SiO_2/Na_2O$ égal à 3,35, présente la composition pondérale suivante :

| | |
|---|---|
| silice | 24,1%; |
| oxyde de sodium | 7,2%; |
| eau | 58,6% |
| glycérine | 10%. |

Cette solution est coulée sur une feuille de verre "float" de 3mm d'épaisseur bordée par un cordon d'étanchéité maintenant la solution. On dépose 6700g/m² de solution. L'épaisseur de solution est de 5mm.

La solution est séchée dans une enceinte à atmosphère contrôlée en humidité et température, en suivant un cycle temps/température bien défini.

Après séchage la teneur en eau résiduelle est de 24%.

Exemple 1.

Dans cet essai on prépare une solution à partir d'un mélange de deux solutions commerciales de silicate de sodium. Le mélange répond à la composition pondérale :

|        |        |
|--------|--------|
| silice | 23,0%; |
| oxyde de sodium | 6,9%; |
| eau | 56,1% |
| glycérine | 14%. |

On mélange 4800g de cette solution, 190g de soude et 1000g d'une suspension de silice colloïdale dont la composition est :

|        |      |
|--------|------|
| silice | 50%; |
| eau | 50%. |

En procédant au mélange de la solution de silicate de sodium et de la suspension de silice colloïdale, il faut éviter la présence de bulles qui peuvent se former en particulier au cours de l'agitation du mélange. Il faut aussi prendre soin d'éviter la présence de particules agglomérées qui ne seraient pas résorbées au stade suivant de séchage ou d'étuvage des vitrages assemblés.

Dans la solution ainsi constituée, la teneur en eau est de 53% en poids, et le rapport molaire apparent $SiO_2/Na_2O$ est comme précédemment de 3,35. Bien que la teneur en eau soit moins élevée que pour la composition de l'exemple comparatif, la solution est stable et reste fluide.

Cette solution est coulée comme précédemment. On dépose 6000g/m2 de solution. L'épaisseur de solution sur la feuille de verre est de 4,2mm.

La solution est séchée dans les mêmes conditions que pour l'exemple comparatif, mais la durée pour parvenir à la même teneur en eau finale de 24%, est plus courte pour une même épaisseur finale. L'épaisseur totale à sécher est réduite de 16%, et la quantité d'eau à évaporer est réduite de 20%. Le temps de séchage lui-même est réduit d'environ 30%.

Après séchage les bords sont découpés, et le produit obtenu est assemblé de façon traditionnelle avec une deuxième feuille de verre de 3mm d'épaisseur recouvrant la couche séchée.

Le vitrage constitué est soumis à la procédure normalisée d'épreuve au feu EN 1364.

Le vitrage satisfait aux exigences d'isolation et d'étanchéité de type noté EW30.

Exemple comparatif 2.

Une solution de silicate de sodium industrielle de rapport molaire apparent $SiO_2/Na_2O$ égal à 3.85 présente la composition pondérale suivante :

|        |        |
|--------|--------|
| silice | 20,1 %; |
| oxyde de sodium | 5,2 %; |
| eau | 64 %. |
| glycérine: | 10,7 % |

Cette solution est coulée sur une feuille de verre float de 3mm d'épaisseur bordée par un cordon d'étanchéité maintenant la solution. On dépose 6300g/m² de solution. L'épaisseur de solution est de 5 mm.

La solution est séchée comme précédemment jusqu'à l'obtention d'une teneur en eau résiduelle de 24%.

Exemple 2.

Dans cet essai on part d'une solution industrielle disponible dans le commerce de composition pondérale :

|        |        |
|--------|--------|
| silice | 23,0 % |
| oxyde de sodium | 6,9 %; |
| eau | 55,9 %. |
| glycérine: | 14,2 % |

On mélange 4750 g de cette solution et 345 g d'une suspension de silice colloïdale dont la composition est :

|        |      |
|--------|------|
| silice | 50% |
| eau | 50%. |

Dans la solution ainsi constituée, la teneur en eau est de 57,4% et le rapport molaire apparent $SiO_2/Na_2O$ est comme précédemment de 3,85. Bien qu'à teneur en eau moins élevée que pour la composition de l'exemple comparatif, la solution est stable et reste fluide.

Cette solution est coulée comme précédemment. On dépose 5100 g/m² de solution. L'épaisseur de solution est de 3.8 mm.

La solution est séchée dans les mêmes conditions que pour l'exemple comparatif, mais la durée pour parvenir à la même teneur en eau finale de 24% est cette fois beaucoup plus courte. L'épaisseur totale à sécher est réduite de 24%, la quantité d'eau à évaporer de 30%. Le temps de séchage est donc réduit lui aussi réduit, d'environ 40%.

Exemple 3.

La composition de l'exemple 2 est coulée à raison de 6270g/m2, sur une épaisseur de 5 mm.

Le séchage est conduit comme précédemment mais sur cette couche plus épaisse est prolongé jusqu'à l'obtention de la même teneur en eau. La durée totale de séchage est approximativement celle de l'exemple comparatif 2. Selon l'invention il est donc possible de former des couches intumescentes plus épaisses tout en conservant un temps de séchage acceptable.

La possibilité de disposer de couches intumescentes plus épaisses dans des conditions de production économiquement acceptables peut conduire à des vitrages, pour une même performance, comportant un nombre de couche moindre et par suite comportant moins de feuilles de verre.

Bien entendu les assemblages réalisés à partir des couches intumescentes préparées selon les modalités de l'invention ne se limitent pas à la combinaison comportant une couche intumescente entre deux feuilles de verre. Des assemblages variés comportant plusieurs couches intumescentes associées à plusieurs feuilles de verre permettent d'accroître les propriétés de résistance au feu.

## Revendications

1.  Procédé de production d'un vitrage anti-feu comprenant au moins une couche d'un matériau intumescent à base de silicate de sodium hydraté, dans lequel la couche intumescente est obtenue par séchage d'une solution de silicate de sodium industrielle additionnée d'une suspension de silice colloïdale, le mélange soumis à séchage présentant initialement une teneur en eau en poids du mélange hors additifs exprimé par la relation :

$$H_2O\% < 13xRm + 14$$

dans laquelle Rm est le rapport molaire $SiO_2/Na_2O$, ce rapport étant de 3,2 à 3,8, le séchage étant conduit jusqu'à l'obtention d'une couche intumescente dont la teneur en eau est comprise entre 20 et 35% en poids et de préférence de 22 et 30%.

2.  Procédé selon la revendication précédente dans lequel la couche intumescente comprend en plus un ou plusieurs polyols en quantité au plus égale à 25% et de préférence au plus égale à 20% en poids.

3.  Procédé selon la revendication 2 dans lequel la couche intumescente comprend une teneur en polyols qui n'est pas inférieure à 5% en poids.

4.  Procédé selon l'une des revendications précédentes dans lequel la silice introduite sous forme de suspension aqueuse de silice colloïdale représente au moins 10% de toute la silice de la couche.

5.  Procédé selon la revendication 4 dans lequel la part de silice introduite sous forme colloïdale à la totalité de la silice présente dans la couche intumescente n'est pas supérieure à 40%.

6.  Procédé selon l'une des revendications précédentes dans lequel une part du sodium est introduite sous forme d'hydroxyde de sodium en solution concentrée ou sous forme de pastilles.

7.  Procédé selon la revendication 6 dans lequel la part de sodium introduite n'est pas supérieure à 40% de la totalité du sodium présent.

8.  Vitrage obtenu par un procédé selon l'une des revendications précédentes dans lequel la couche intumescente présente une épaisseur supérieure à 1mm et de préférence supérieure à 1,5mm.

## Patentansprüche

1.  Verfahren zur Herstellung einer Brandschutzverglasung, welche mindestens eine Schicht aus einem anschwellenden Material auf der Basis von hydratisiertem Natriumsilikat aufweist, bei welchem die anschwellende Schicht durch Trocknung einer industriellen Lösung von Natriumsilikat erzielt wird, welche einer Suspension von kolloidaler Kieselsäure zugegeben wird, wobei die einer Trocknung unterworfene Mischung anfänglich einen Wassergehalt vom Gewicht der Mischung ohne Zusatzstoffe aufweist, welcher durch die folgende Ungleichung ausgedrückt wird:

$$H_2O\% < 13xRm + 14$$

in welcher Rm das Molverhältnis $SiO_2/Na_2O$ ist, wobei dieses Verhältnis zwischen 3,2 und 3,8 liegt, wobei die Trocknung solange durchgeführt wird, bis eine anschwellende Schicht erzielt wird, deren Wassergehalt zwischen 20 und 35 Gew.-%, und vorzugsweise zwischen 22 und 30%, liegt.

2.  Verfahren nach dem vorhergehenden Anspruch, bei welchem die anschwellende Schicht außerdem ein oder mehrere Polyole von einer Gewichtsmenge von höchstens gleich 25%, und vorzugsweise von höchstens gleich 20%, aufweist.

3.  Verfahren nach Anspruch 2, bei welchem die anschwellende Schicht einen Gehalt an Polyolen aufweist, welcher nicht kleiner als 5 Gew.-% ist.

4.  Verfahren nach einem der vorhergehenden Ansprüche, bei welchem die Kieselsäure, welche in der Form einer wässrigen Suspension von kolloidaler Kieselsäure eingebracht wird, mindestens 10% der gesamten Kieselsäure der Schicht darstellt.

5.  Verfahren nach Anspruch 4, bei welchem der in kolloidaler Form eingebrachte Teil von Kieselsäure zu der gesamten in der anschwellenden Schicht vorhandenen Kieselsäure nicht größer als 40% ist.

6.  Verfahren nach einem der vorhergehenden Ansprüche, bei welchem ein Teil des Natriums in der Form von Natriumhydroxid in konzentrierter Lösung oder in Form von Pellets eingebracht wird.

**7.** Verfahren nach Anspruch 6, bei welchem der eingebrachte Teil des Natriums nicht größer als 40% des gesamten vorhandenen Natriums ist.

**8.** Verglasung, welche durch das Verfahren nach einem der vorhergehenden Ansprüche erzielt wird, bei welcher die anschwellende Schicht ein Dicke von größer als 1mm, und vorzugsweise von größer als 1,5mm, aufweist.

**Claims**

**1.** Process for producing fire-resistant glazing comprising at least one layer of an intumescent material based on hydrated sodium silicate, in which the intumescent layer is obtained by drying an industrial sodium silicate solution to which a colloidal silica suspension has been added, the mixture subjected to drying initially having a water content, by weight of the mixture excluding additives, expressed by the equation:

$$H_2O\% < 13 \times Rm + 14$$

in which Rm is the $SiO_2/Na_2O$ molar ratio, this ratio being from 3.2 to 3.8, the drying being carried out until an intumescent layer having a water content of between 20% and 35% by weight, and preferably between 22% and 30%, is obtained.

**2.** Process according to the preceding claim, in which the intumescent layer additionally comprises one or more polyols in an amount at most equal to 25% and preferably at most equal to 20% by weight.

**3.** Process according to Claim 2, in which the intumescent layer has a polyol content that is not less than 5% by weight.

**4.** Process according to one of the preceding claims, in which the silica introduced in the form of an aqueous suspension of colloidal silica represents at least 10% of all the silica of the layer.

**5.** Process according to Claim 4, in which the portion of silica introduced in colloidal form relative to all the silica present in the intumescent layer is not greater than 40%.

**6.** Process according to one of the preceding claims, in which a portion of the sodium is introduced in the form of sodium hydroxide in concentrated solution or in the form of pellets.

**7.** Process according to Claim 6, in which the portion of sodium introduced is not greater than 40% of all of the sodium present.

**8.** Glazing obtained by a process according to one of the preceding claims, in which the intumescent layer has a thickness greater than 1 mm and preferably greater than 1.5 mm.